Europäisches Patentamt

European Patent Office

Office européen des brevets

(19)

(11) **EP 1 218 708 B1**

(12) **FASCICULE DE BREVET EUROPEEN**

(45) Date de publication et mention
de la délivrance du brevet:
**05.10.2005 Bulletin 2005/40**

(21) Numéro de dépôt: **00958619.9**

(22) Date de dépôt: **26.07.2000**

(51) Int Cl.⁷: **G01J 5/12**

(86) Numéro de dépôt international:
**PCT/FR2000/002144**

(87) Numéro de publication internationale:
**WO 2001/009578 (08.02.2001 Gazette 2001/06)**

(54) **ANALYSEUR THERMO ENERGETIQUE**

VORRICHTUNG ZUR ANALYSE VON WäRMESTRAHLUNG

DEVICE FOR ANALYSING HEAT ENERGY RADIATION

(84) Etats contractants désignés:
**AT BE CH CY DE DK ES FI FR GB GR IE IT LI LU
MC NL PT SE**

(30) Priorité: **29.07.1999 FR 9909831
03.01.2000 FR 0000009**

(43) Date de publication de la demande:
**03.07.2002 Bulletin 2002/27**

(73) Titulaire: **Bourrieres, Francis
82000 Montauban (FR)**

(72) Inventeurs:
• **Bourrieres, Francis
82000 Montauban (FR)**
• **Kaiser, Clément
82000 Montauban (FR)**

(56) Documents cités:
**EP-A- 0 246 951      GB-A- 2 275 106**

**Description**

La présente invention concerne un dispositif de conversion de température en énergie thermique échangée à travers un milieu gazeux ou le vide et qui permet réciproquement d'évaluer une température en fonction d'énergies thermiques échangées. Ce dispositif est appelé analyseur thermo énergétique. Il permet par exemple de surveiller et d'évaluer le mode de transfert de calories, ainsi que la puissance transmise d'une source de calories. Les exemples de mise en oeuvre de l'invention sont pour la plupart donnés dans le domaine de l'assemblage électronique pour le brasage ou la polymérisation de cartes électroniques.

Cependant, l'invention peut être appliquée dans d'autres domaines techniques, comme par exemple le séchage de peintures ou d'encres, la cuisson d'aliments, la mesure de températures instantanées dans l'air ambiant, ...

Généralement les mesures de flux thermiques reçus par une pièce sont déduits à partir des mesures de températures faites à l'aide d'un thermocouple fixé sur la pièce. Le thermocouple doit être fixé intimement sur la pièce afin que celle-ci transmette sa température par conduction au thermocouple. Il est donc impératif que le thermocouple et son mode de fixation soient le plus petit possible afin de ne pas perturber la mesure. Par contre, il apparaît qu'il n'est pas toujours envisageable de placer un thermocouple sur les pièces et dans ce cas la mesure de température d'une pièce soumise à un flux d'énergie thermique transmis à travers un gaz ou le vide devient délicat et aléatoire. En effet si le thermocouple n'est pas fixé sur la pièce, comme il a une masse thermique et une émissivité inconnues alors que la surface exposée au flux thermique est négligeable, il en découle une mesure imprécise et non représentative de ce que les pièces captent réellement par convection et par rayonnement infrarouge. La présente invention vise à apporter une solution afin d'analyser et de quantifier la nature des flux thermiques générés par radiation et par convection par une source de calories afin de pouvoir agir efficacement sur l'un ou sur l'autre en fonction de leur influence respective sur le produit à traiter.

Le brasage de composants électroniques ou la polymérisation de colles dans un four, consiste à interconnecter des composants, généralement montés en surface, sur un substrat par le biais d'une crème à braser ou d'une colle. La refusion de la crème à braser ou la polymérisation de la colle est obtenue grâce à un cycle thermique généré habituellement par un générateur de calories dans lequel le produit va défiler. L'objectif étant de faire subir le même cycle de température à chaque site à interconnecter, or comme les composants présentent des masses thermiques, des formes et des émissivités très variables, ceci est rendu difficile voir impossible à réaliser.

Pour braser des composants sur une carte électronique à l'aide de crème à braser, il est impératif de respecter un profil thermique ou plus précisément un intervalle de tolérance appelé fenêtre thermique, constitué de deux profils thermiques extrêmes. Ces deux profils thermiques extrêmes représentent les limites supérieures et inférieures au-delà desquelles la qualité des brasures n'est plus optimum et où l'on risque de générer des pannes en cours de production ou encore de réduire considérablement la durée de vie d'un produit électronique.

Une fenêtre thermique adaptée à la refusion des crèmes à braser en électronique comprend donc généralement :

- une première zone de montée en température, qui permet l'évaporation des solvants légers,
- une deuxième zone d'activation de la partie active contenue dans la crème à braser qui permet de décaper les surfaces à braser,
- une troisième zone qui permet de réaliser l'intermétallique ainsi que la structure métallurgique nécessaire à une brasure de bonne qualité.

En plus des conditions de réalisation de brasures de qualité optimum, il faut également veiller à ce que le patamétrage du four ne génère pas des variations trop brutales ainsi que des pics de températures susceptibles d'endommager des composants électroniques ou le substrat.

Le même inventeur a mis à disposition des ateliers de fabrication électroniques des fenêtres thermiques en fonction de la durée de séjour de la carte dans le four, qui prennent en compte les contraintes précédemment citées. Ces fenêtres thermiques sont rassemblées dans une base de données et commercialisées par l'intermédiaire du logiciel NOVATEC depuis 1995.

Les fours utilisés en assemblage électronique se présentent habituellement sous forme d'un tunnel ou d'une tour dans lequel le produit à braser va défiler.

Plusieurs zones sont réparties tout au long du four et vont permettre d'exposer le produit électronique soit à des émetteurs infrarouges, soit à des flux d'air ou d'azote forcés dans le cas des fours dits convectifs. Le réglage du profil thermique sur une carte est généralement obtenu par modification des températures de consignes de chaque zone et ou par la vitesse de déplacement du produit dans le four, sachant que dans la majorité des cas, il est possible d'ajuster les températures des zones situées au-dessus et en dessous des produits à braser de façon indépendante.

Il apparaît qu'il peut être très difficile de paramétrer certains types de fours de manière à respecter des fenêtres thermiques imposées, quelquefois même on peut aboutir à des impossibilités, car par exemple les masses thermiques et les formes des composants présents sur la carte sont trop hétérogènes ou encore parce que les différences d'émissivité de certains composants empêchent de rassembler suffisamment les profils thermiques subis par les différents sites à braser pour être encadrés par la fenêtre thermique correspondante. Ceci est de plus en plus vrai sur les cartes électroniques modernes sur lesquelles cohabitent de plus en plus de fonctionnalités, et donc de sources d'hétérogénéité thermique et sur lesquelles on utilise de plus en plus souvent des composants à billes qui ont la particularité de présenter leurs entrées-sorties à braser sur leur face inférieure cachée par rapport aux éléments chauffants des fours. Pour homogénéiser les profils thermiques sur des produits de plus en plus hétérogènes, on assiste depuis plusieurs années à une évolution technique des fours qui consiste à réduire de plus en plus la part de chauffage par rayonnement infrarouge et de favoriser le chauffage par convection forcée. En effet l'énergie transmise par convection est indépendante de l'émissivité des différents composants présents sur les produits électroniques à braser, ce qui a pour conséquence d'enlever une source d'hétérogénéité de température. Par contre, il apparaît également qu'une partie du chauffage par rayonnement infrarouge est toujours présente dans les fours dits convectifs non seulement, car les parois chaudes du four émettent forcément des rayonnements infrarouges, mais également car elle est souhaitable pour atteindre le pic de refusion de la crème à braser. En effet, la puissance transmise par la convection forcée seule n'est pas suffisante ou alors ceci nécessiterait des vitesses de flux convectifs ou des températures incompatibles avec l'application. Par conséquent le rayonnement infrarouge reste présent pour partie dans les fours et il apparaît même que pour éviter de déplacer des composants lors de l'étape de refusion par les flux convectifs, certains fabricants de four combinent de façon astucieuse la part de rayonnement et de convection sans avoir le moyen de contrôler et de quantifier les différentes parts.

Généralement, pour régler ou vérifier la stabilité dans le temps d'un profil thermique pour une carte et un four donné, on dispose des thermocouples sur une carte électronique équipée de composants identiques à celles qui doivent être produites, puis la carte ainsi équipée est passée dans le four avec un enregistreur qui permettra de visualiser le profil thermique subi par les thermocouples tout au long du passage dans le four.

On comprend dès lors qu'il est important de choisir les sites de fixation des thermocouples afin d'enregistrer le profil thermique le plus « froid » et le plus « chaud » de la carte afin de pouvoir les comparer à une fenêtre thermique. Or l'opérateur ne dispose d'aucune information lui permettant de sélectionner à priori ces deux sites extrêmes, si ce n'est son expérience et le volume des composants qui donnent une indication approximative sur la masse thermique.

Il reste donc toujours une incertitude sur la fiabilité des enregistrements avec ce type de relevé de profils thermiques car on n'est jamais sûr d'avoir mesuré les profils thermiques extrêmes de la carte. D'autre part, la fixation des thermocouples nécessite l'utilisation d'un alliage d'apport ou d'une colle de masse thermique et d'émissivité inconnues ce qui a pour effet de fausser la mesure. De plus, la durée de vie d'un tel véhicule de mesure est limitée et après une dizaine de cycles thermiques le substrat est déjà noirci ce qui a pour effet de changer son émissivité et donc la mesure de température ne reflétera plus la température atteinte sur les cartes de production. Sachant d'autre part, que la réalisation d'un tel véhicule de mesure est longue et fastidieuse, on comprend que les fabricants de cartes électroniques soient demandeurs d'une solution plus fiable, plus rapide et moins coûteuse.

Dans le cas de réalisation de cartes prototypes ou de têtes de série, il est impensable de détruire une carte pour contrôler le profil de température, donc ici encore les fabricants de cartes sont demandeurs d'un moyen universel de vérification du paramétrage du four.

Pour répondre à cette attente, certains fabricants proposent d'équiper le four avec des thermocouples répartis tout au long du four, ainsi ils sont en mesure de suivre approximativement l'ambiance qui règne dans l'enceinte.

L'inconvénient de cette méthode est qu'elle ne tient pas compte des masses thermiques et des surfaces des composants et de plus comme l'émissivité des thermocouples est inconnue, elle ne donne qu'une vague idée du cycle thermique lié à la part convective alors que l'énergie reçue par rayonnement infrarouge est totalement aléatoire. En effet, cette méthode de mesure d'ambiance ne permet en aucun cas de déterminer le profil thermique que subira un produit réel.

Le brevet US4770541 décrit un capteur de rayonnement et son mode de réalisation. Cette invention vise à fournir un capteur capable de donner une idée du rayonnement reçu par la face supérieure du capteur par la mesure de la différence de température entre deux capteurs d'émissivité opposée. Elle ne permet pas de quantifier la part convective et radiative qui intervient dans le chauffage ainsi que la sensibilité du moyen de chauffage aux masses thermiques. D'ailleurs ce n'est pas l'objet recherché puisque le but dans ce cas n'est pas de fournir un capteur d'évaluation, de contrôle de paramétrage d'un four. En particulier, la part convective est neutralisée par un confinement des capteurs ou par des éléments chauffants comme dans le brevet US5010315.

Dans le document brevet EP 0246 951 A, qui concerne un fluxmètre radiatif, on cherche à obtenir une force électromotrice représentative de l'énergie infrarouge sans passer par une mesure de température. En fait, on joue sur le comportement thermoélectrique différent de 2 matériaux différents (cette force électromotrice étant d'ailleurs perturbée par le flux d'énergie convectif éventuel). Il ne s'agit donc pas d'un procédé ou d'un dispositif de conversion de température directement en un flux d'énergie thermique infrarouge et en un flux d'énergie thermique convective. De plus, ce brevet ne permet ni de quantifier le flux radiatif, car il a pour but de déterminer une force électromotrice proportionnelle à l'intensité du flux radiatif, ni de quantifier le flux d'énergie convectif, car au contraire on cherche à le neutraliser par différence entre deux fluxmètres de préférence imbriqués.

Le document brevet GB 2275 106 A concerne également un fluxmètre radiatif. Ici encore, le but est de compenser l'écart de température entre deux corps présentant des émissivités opposées, par chauffage du corps le plus froid. La quantité d'énergie nécessaire pour maintenir les deux corps à la même température est proportionnelle au flux d'énergie infrarouge. Le fait de considérer l'écart entre deux corps revient à éliminer l'influence de l'énergie convective qu'on ne cherche pas à évaluer et encore moins à quantifier.

La présente invention vise à apporter une solution aux différents problèmes et demandes rencontrés par l'homme de l'art.

Le dispositif selon l'invention appelé analyseur thermo énergétique consiste en un moyen de conversion de la température en énergie thermique échangée à travers un milieu gazeux ou le vide et réciproquement de déterminer une température en fonction d'énergies thermiques échangées. Il permet en particulier de quantifier les flux d'énergies infrarouges et convectifs transmis par le four à tout moment d'un cycle de température. Connaissant à tout moment la nature et la valeur des flux thermiques :

- on peut déduire les profils de températures subis par les différents sites ou pièces du produit à chauffer,
- on peut vérifier la stabilité d'un réglage au fil du temps,
- on dispose d'un outil universel qui permet de vérifier le bon paramétrage ainsi que la qualité intrinsèque d'un four par rapport à une application,
- on peut établir les écarts thermiques maximum pour chaque produit,
- on peut déterminer le paramétrage nécessaire pour respecter une fenêtre thermique.

La présente invention se caractérise essentiellement en ce qu'elle met en oeuvre, dans un premier mode de réalisation, un procédé selon la revendication 1, et, dans un deuxième mode de réalisation, un procédé selon la revendication 4.

Un appareil correspondant au premier mode de réalisation est défini dans la revendication 5.

Des modes de réalisation additionels sont définis dans les revendications dépendantes.

Les différents collecteurs sont orientés et disposés de façon identique et peuvent soit être déplacés par rapport au générateur de calories, soit être fixes. Les capteurs sont reliés à un système enregistreur, de cette façon les températures atteintes par les ensembles sont intégralement transmises à un enregistreur et permettent de déterminer à chaque instant, par calcul, la part d'énergie transmise par convection et celle transmise par rayonnement infrarouge.

Les ensembles sont constitués d'une surface réceptrice orientée de façon identique que le corps à chauffer par rapport aux flux thermiques et de façon avantageuse le capteur de température pourra être un thermocouple fixé sur la dite surface par le biais de tout moyen connu de telle sorte que la mesure ne soit pas perturbée. Il est également envisageable de remplacer le thermocouple par une thermistance ou tout autre capteur connu, à condition que sa masse thermique et sa surface ne constituent pas une perturbation aux variations de température du collecteur. En effet, une masse thermique importante nuirait à la sensibilité du dispositif.

Ainsi donc, il est possible suivant les profils thermiques subis par les différents ensembles de déterminer par calcul les flux thermiques transmis par rayonnement infrarouge et par convection par le four à un paramétrage donné. En effet, la montée en température d'un corps soumis à un flux d' énergie est régie par l'équation différentielle suivante :

$$\frac{dT}{dt} = \frac{\Phi_{total}}{m.c}$$

dT : étant la variation de température pendant l'intervalle de temps dt

$\Phi_{total}$ : étant le flux d'énergie total reçu par le corps.

m : étant la masse du corps

c : étant la chaleur massique du corps.

D'autre part, le flux d'énergie total reçu par le corps s'écrit :

$$\Phi_{Total} = \Phi_{convectif} + \Phi_{reçu\ par\ rayonnement\ infrarouge} - \Phi_{réémis\ par\ rayonnement\ infrarouge}$$

$$+ \Phi_{reçu\ par\ conduction}$$

Or le flux convectif s 'écrit : $\Phi_{convectif} = S\ h\ (T_F - T_C)$

h : étant le coefficient de transfert thermique en $W\ m^{-2}\ K^{-1}$

S : étant la surface soumise au flux thermique.

Les flux radiatifs s'écrivent :

$\Phi_{\text{Infrarouge reçu}} = S \, \varepsilon \, E_{IR}$
$\Phi_{\text{Infrarouge réémis}} = S \, \varepsilon \, \sigma \, T_C^4$
$\sigma$ : étant la constante de Stéfan = 5,67 $10^{-8}$ W $m^{-2}$ $K^{-4}$
$T_C$ : étant la température du corps
$T_F$ : étant la température du fluide
$\varepsilon$ : étant l'émissivité du corps
$E_{IR}$ : étant l'énergie reçue par rayonnement infrarouge.

Par conséquent pour un corps qui n'échange pas de calories par conduction, on peut écrire : l'équation 1 suivante $\dfrac{dT_C}{dt}$

$= \dfrac{S}{mc} [h(T_F - T_C) + \varepsilon E_{IR} - \varepsilon\sigma T_C^4]$  $E_{IR} = \dfrac{h(T_F - T_B)(\Delta T_N - \Delta T_B) + \varepsilon_N \Delta T_B \sigma T_N^4 - \varepsilon_B \Delta T_N \sigma T_B^4}{\varepsilon_N \Delta T_B - \varepsilon_B \Delta T_N}$ Cette équation peut être écrite pour les trois ensembles précédemment cités et on peut donc en déduire le coefficient de transfert thermique, l'énergie infrarouge et l'énergie convective reçue.

Il est à noter que si la géométrie du générateur de calories du produit ainsi que les vitesses de fluides sont connues, il est possible de déterminer le coefficient de transfert thermique h par calcul et dans ce cas le troisième ensemble n'est pas nécessaire.

Il est donc possible de distinguer deux cas de figure :

- dans le premier cas on n'utilise que les deux premiers ensembles et grâce à l'équation 1 pour ces deux ensembles on en déduit les profils énergétiques radiatif et convectif alors que le coefficient de transfert thermique sera calculé grâce à la connaissance des caractéristiques du système de transfert de calories.
- dans le deuxième cas on utilise les trois ensembles et grâce à l'équation 1 pour ces trois ensembles, on en déduit le profil du coefficient de transfert thermique en fonction du temps et on se sert de ce coefficient de transfert thermique pour déterminer les profils énergétiques radiatif et convectif.

Comme on peut le voir, les variations de température en fonction de l'énergie radiative et convective captée par une pièce est directement proportionnelle à l'inverse du rapport masse multipliée par la chaleur massique et divisée par la surface exposée aux flux thermiques. Un capteur sera donc d'autant plus sensible que ce rapport sera faible. Par conséquent pour une application donnée on aura donc intérêt à choisir les deux premiers ensembles de sorte que ce rapport soit faible en comparaison de ce même rapport correspondant aux pièces à traiter dans le générateur de calories. D'autre part, afin de pouvoir déterminer la part d'énergie radiative à tout moment avec le maximum de précision, il est souhaitable d'amplifier l'effet du rayonnement en utilisant un collecteur pour le premier ensemble avec une émissivité la plus importante possible. Inversement pour minimiser la part de rayonnement et ainsi mesurer au mieux la part convective en particulier lorsque la part de cette dernière est faible dans le générateur de calories, il convient d'utiliser une émissivité faible pour le collecteur du deuxième ensemble. Ainsi la sensibilité du dispositif selon l'invention à détecter les flux d'énergies radiatif et convectif sera d'autant plus grande que le rapport $\dfrac{mxc}{s}$ sera faible et que la différence d'émissivité sera importante entre les deux ensembles.

Par contre pour déterminer le coefficient de transfert thermique h et limiter la marge d'erreur dans le calcul, il est souhaitable de dimensionner le troisième ensemble de sorte que le rapport correspondant soit équivalent ou de même ordre de grandeur que celui des pièces à traiter dans le générateur de calories. En fait ceci revient à effectuer un lissage sur le profil de h et à éliminer toutes les variations brutales qui peuvent soit être liées à une imprécision de la mesure de température, soit à des variations réelles de h mais sur des durées trop faibles pour qu'elles aient une incidence sur les pièces à traiter dans le générateur de calories.

Selon une autre caractéristique non revendiquée de la présente invention, il est possible par le calcul inverse et en connaissant, pour un paramétrage donné, la part de rayonnement et de convection du four, de calculer le profil thermique que subira une pièce disposée de façon identique aux collecteurs, de masse thermique, d'émissivité et de surface exposée aux flux thermiques connus.

Selon une autre caractéristique non revendiquée de l'invention le suivi et la surveillance des profils thermiques des trois ensembles permet de vérifier la stabilité d'un paramétrage donné au fil du temps. En effet l'encrassement d'un four aura pour effet par exemple de modifier l'émissivité des parois du four et par conséquent ceci sera détectable par le premier ensemble, de même la défaillance d'un émetteur infrarouge ou d'un générateur de flux d'air ou d'azote pourra être détectée de la sorte et provoquer le déclenchement d'une action corrective ou d'une maintenance préventive sur le générateur de calories. De cette façon la surveillance du four ne nécessite plus de sacrifier des cartes pour vérifier l'adéquation des paramétrages avec l'application.

Selon une autre caractéristique non revendiquée de la présente invention, l'écart de température sur les profils thermiques du premier et du deuxième ensemble est proportionnel à la sensibilité du générateur de calories aux variations d'émissivité des différentes pièces ou parties du produit à chauffer.

Selon une autre caractéristique de l'invention, il est avantageux de choisir le troisième ensemble de telle sorte qu'il ait une masse thermique identique ou supérieure à la plus grosse pièce constituant le produit à chauffer dans le four et une émissivité connue et plus faible que cette même pièce ainsi on peut visualiser de façon instantanée les profils thermiques extrêmes dont le produit à chauffer peut être le siège suivant les profils thermiques subits par le premier et ce troisième ensemble.

Selon une autre caractéristique non revendiquée de la présente invention, l'écart de température sur les profils thermiques du premier et du troisième ensemble est proportionnel à la sensibilité du générateur de calories aux différences de masses thermiques des différentes pièces ou parties du produit à chauffer.

Selon une autre caractéristique non revendiquée de la présente invention, il est possible de porter un jugement de valeur objectif sur un four par rapport à une application déterminée. Par exemple, pour le brasage d'une carte électronique on cherchera un four étant le moins sensible aux différences d'émissivités ou de masses thermiques, alors que pour une application de séchage de peinture on cherchera par exemple à favoriser la part de rayonnement infrarouge.

La présente invention pourra donc avantageusement être utilisée comme outil de qualification d'un four pour une application définie ou de comparaison de fours de différents fabricants ou encore de comparaison de deux fours réputés identiques du même fabricant.

Selon une autre caractéristique non revendiquée de l'invention, comme le premier ensemble à une masse thermique divisée par la surface exposée aux flux thermiques inférieure ou égale aux plus petites pièces à chauffer et une émissivité supérieure ou égale à ces mêmes pièces, on peut dire que le profil thermique correspondant à cet ensemble représente le profil thermique maximum atteignable sur le produit à chauffer. A l'opposé comme le troisième ensemble a une émissivité inférieure ou égale aux plus grosses pièces à chauffer et une masse thermique supérieure ou égale à ces dernières, il est possible de dire que le profil thermique subit par cet ensemble représente le profil minimum atteignable sur le produit à chauffer. En effet les différents phénomènes de conductions ou d'interférences thermiques entre les pièces d'un même produit ne pourront conduire qu'à obtenir des profils thermiques intermédiaires des deux extrêmes précédemment mesurés.

Par conséquent le dispositif selon l'invention permet de façon immédiate de vérifier que le paramétrage d'un four peut être acceptable ou non. En effet dans le cas ou les profils thermiques extrêmes du premier et du troisième ensemble sont compris dans la fenêtre thermique que le fabricant de cartes aura imposée on pourra donc dire de façon certaine que le paramétrage du four est acceptable de même si le profil thermique correspondant au premier ensemble est inférieur à la limite basse de la fenêtre thermique, ou encore, si le profil thermique du troisième ensemble est supérieur à la limite haute de la fenêtre thermique, on pourra conclure de façon immédiate que le paramétrage du four est mauvais.

Dans le cas particulier d'une carte électronique sur laquelle on souhaite braser ou polymériser des composants montés en surface, il apparaît que le circuit imprimé empêche le rayonnement ou le flux convectif de chauffer directement les composants par le dessous. Il est donc possible dans ce cas, que suivant le paramétrage du four, le circuit imprimé va transmettre par conduction un flux de calories positif ou négatif aux composants situés sur sa face supérieure ou encore le circuit imprimé constituera une barrière isolante par rapport au chauffage généré par la partie inférieure du four. Dans ce cas, pour déterminer les profils thermiques extrêmes dont la carte peut être le siège il est avantageux, en plus des trois ensembles précédents qui permettent de capter les flux d'énergie sur leur face supérieure et inférieure, de juxtaposer trois autres ensembles rigoureusement identiques aux trois premiers mais qui sont isolés thermiquement des flux thermiques provenant de la partie inférieure du four et sont également reliés à l'enregistreur de température Cette disposition permet selon le même principe que décrit précédemment de déterminer les flux de rayonnement infrarouges et convectifs issus uniquement de la partie supérieure du four. Ces trois ensembles additionnels permettent également de déterminer de façon certaine les profils thermiques extrêmes dont la carte peut être le siège quel que soit le paramétrage du four et quel que soit le comportement thermique du substrat. En effet le profil thermique le plus chaud possible sera le plus chaud entre celui du premier ensemble et l'ensemble identique au premier mais isolé sur sa face inférieure alors que le profil thermique le plus froid possible sera le plus froid entre celui du troisième ensemble et l'ensemble identique isolé sur la face inférieure.

Dans le même esprit, si l'on veut déterminer les flux thermiques provenant d'une direction donnée, il suffit de disposer un isolant thermique sur le côté opposé de la pièce par rapport à cette direction

D'autres caractéristiques et avantages de l'invention apparaîtront à la lecture de la description ci-après de deux formes de réalisation de l'invention illustrées par les dessins joints.

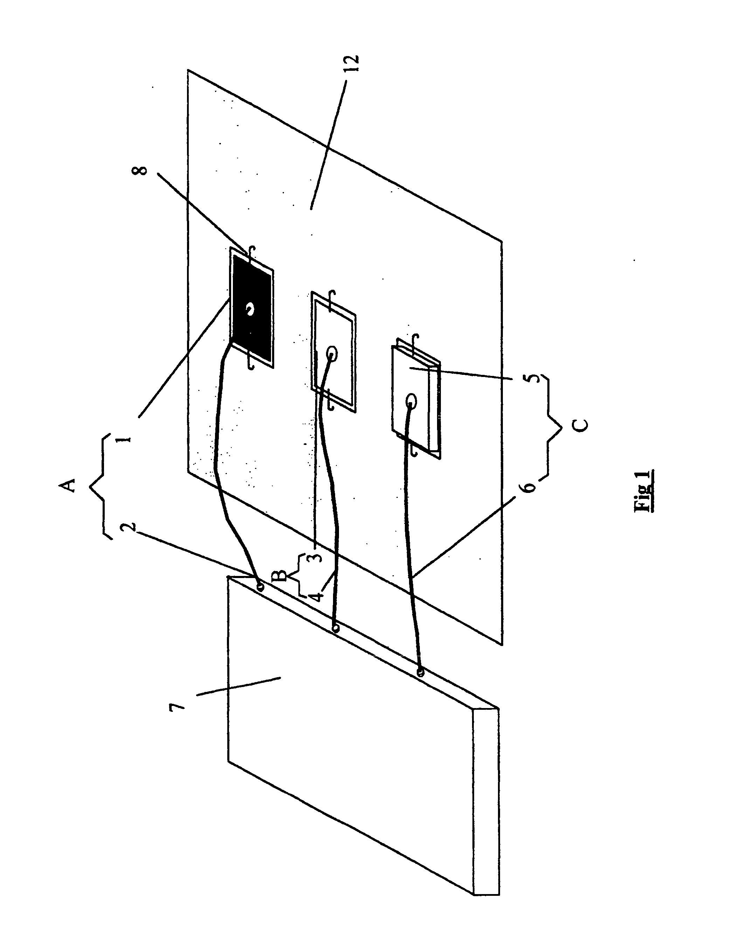

En figure 1 est représentée une vue en perspective du dispositif selon l'invention qui permet de quantifier les flux d'énergie reçus dans un générateur de calories.

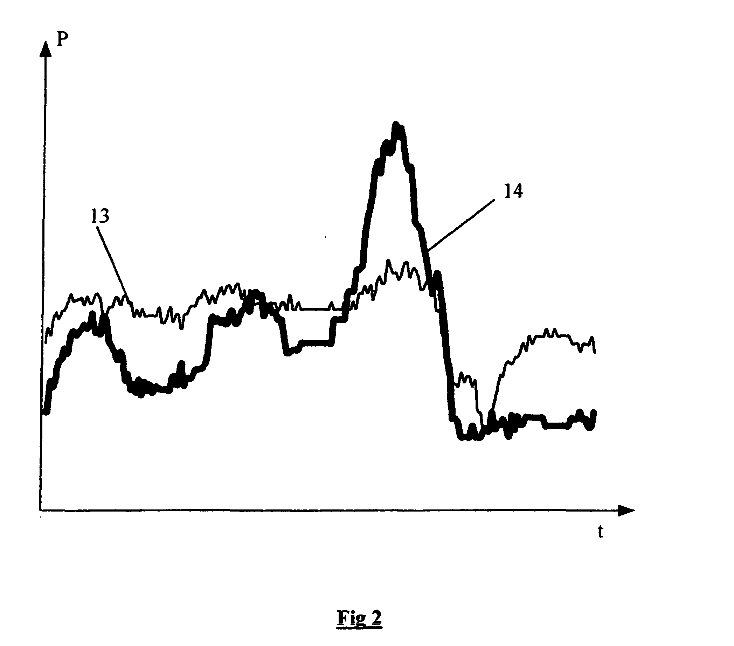

En figure 2 est représenté un graphique qui montre la part de rayonnement et de convection calculée à partir des mesures faites avec le dispositif selon la présente invention.

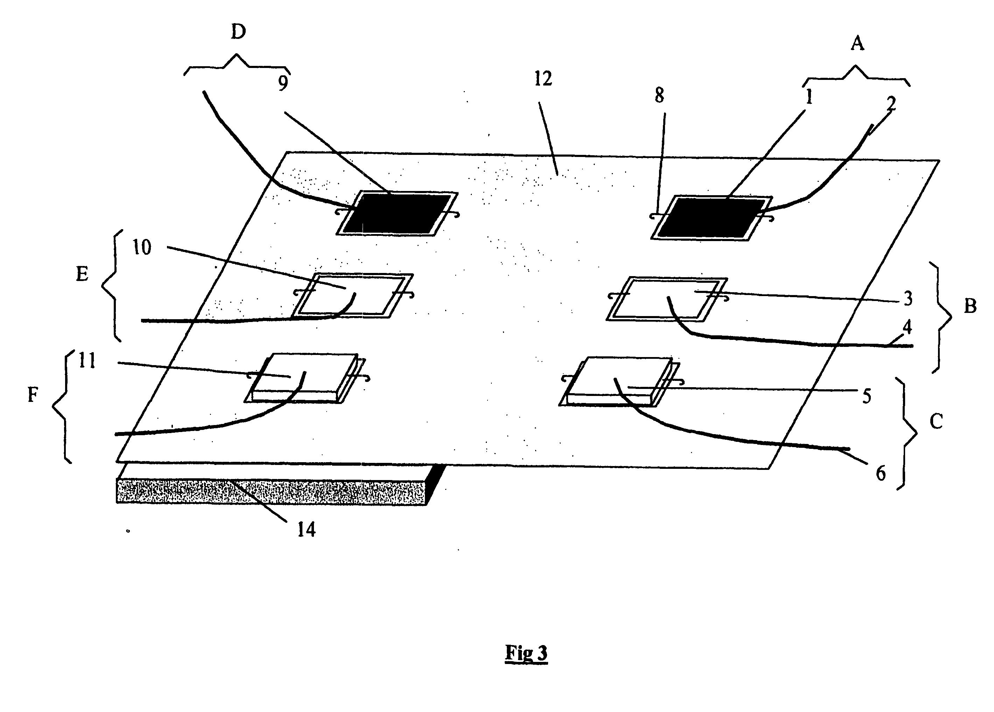

En figure 3 est représentée une vue en perspective d'une autre forme de réalisation de l'invention particulièrement adaptée aux cartes électroniques.

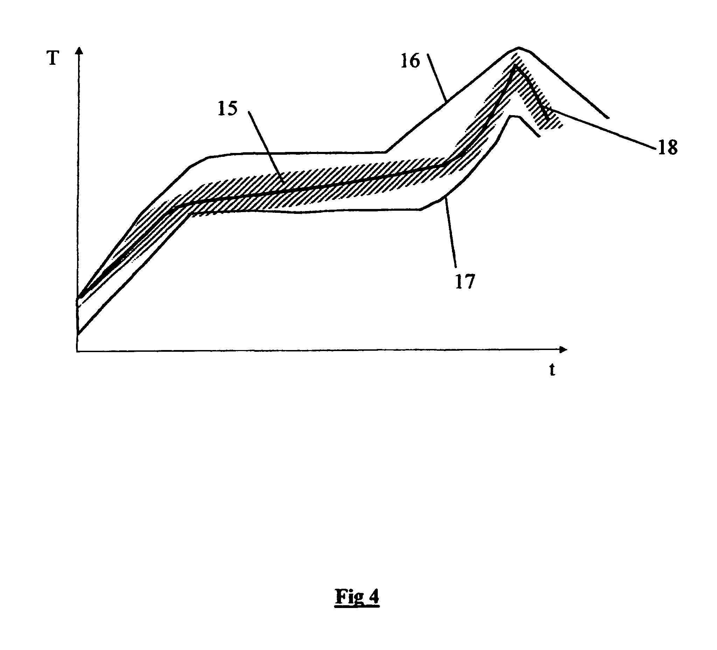

En figure 4 est représenté un graphique qui montre un exemple de fenêtre thermique que les fabricants de cartes électroniques s'imposent, superposé avec les profils de température enregistrés avec un dispositif selon la présente invention.

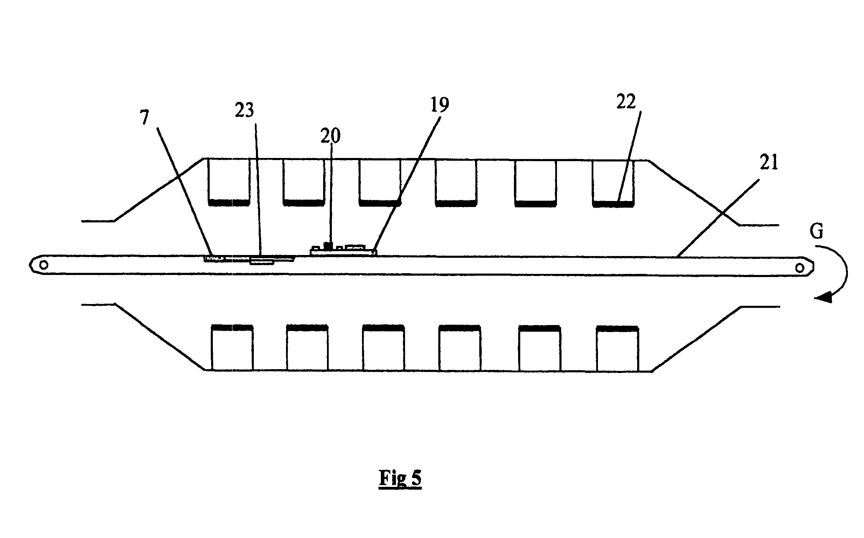

En figure 5 est représentée une coupe d'un four, sur le convoyeur duquel on a fixé un dispositif selon la présente invention.

En référence à ces dessins, le dispositif selon la présente invention comporte :

- un premier ensemble (A) composé d'un collecteur (1) et d'un capteur (2), dont le rapport masse thermique (mxc) divisée par la surface exposée aux flux thermiques (s) est connu et faible et dans tous les cas inférieur à celui de la ou des pièces constitutives du produit à chauffer et dont l'émissivité est proche de un. Pour atteindre une valeur d'émissivité proche de un, on pourra enduire les deux faces du collecteur avec une peinture noire mate haute température, ainsi on obtient une valeur d'émissivité de l'ordre de 0,9. Elle peut également être atteinte par une couche d'oxyde.

- un ensemble (B) composé d'un collecteur (3) et d'un capteur (4), dont le rapport masse thermique divisée par la surface exposée aux flux thermiques est connu et dans tous les cas inférieur à celui de la ou des pièces constitutives du produit à chauffer, et dont l'émissivité est proche de zéro, par exemple par enduction des deux faces du collecteur par une peinture au chrome ou encore par un revêtement d'or ce qui donne une valeur d'émissivité de l'ordre de 0,1.

- un ensemble (C) composé d'un collecteur (5) et d'un capteur (6) dont le rapport masse thermique divisée par la surface exposée au flux thermique est connu et du même ordre de grandeur que celui du produit à chauffer et dont l'émissivité est connue.

Avantageusement et par soucis de simplification les trois premiers ensembles pourront présenter des surfaces exposées aux flux thermiques identiques et être constitués par le même matériau. A titre d'exemple des collecteurs (1) et (3) en cuivre de cent microns d'épaisseur et de dimension trente millimètres par trente millimètres, dont le rapport de la masse thermique (produit de la masse par la chaleur massique de la pièce) divisé par la surface exposée aux flux thermiques est de $3,5\ 10^{-7}$ KJ $K^{-1}$ $mm^{-2}$, et un ensemble (C) constitué d'un collecteur (5) en cuivre de un millimètre d'épaisseur de dimension trente millimètres par trente millimètres, dont le rapport de la masse thermique (produit de la masse par la chaleur massique de la pièce) par la surface exposée aux flux thermiques est de $3,5\ 10^{-6}$ $KJK^{-1}$ $mm^{-2}$ donnent des résultats adaptés pour les cartes électroniques classiques.

Selon l'application concerné, s'agissant par exemple de fours haute température il sera utilisé des matériaux résistant à ces niveaux thermiques et dont la loi de variation d'émissivité en fonction de la température est connue. Ainsi nous pouvons envisager des utilisations égales ou supérieures à 1500°C.

Les trois ensembles sont fixés sur une plaque support (12) par le biais de pièces (8) de très faible section et dont la conductivité thermique est pratiquement nulle et chaque collecteur (1) (3) et (5) est respectivement équipé d'un capteur (2) (4) et (6) relié à un enregistreur de température (7) de tout type connu. Pour minimiser l'influence des phénomènes de conduction liés aux pièces de fixation (8), il convient d'utiliser des collecteurs présentant des surfaces exposées aux flux thermiques importantes, de sorte que le rapport entre les flux thermiques conductifs parasites et les flux radiatifs ou convectifs soit le plus faible possible.

La figure 2 montre un graphique donnant la part de rayonnement (13) et de convection (14) en W/m$^2$ reçue en fonction du temps dans le générateur de calories. Ces courbes sont obtenues selon le calcul précédemment développé.

La figure 3 montre une variante de la présente invention particulièrement adaptée à l'opération de brasage ou de polymérisation des cartes électroniques. Une plaque support (12) comporte les six collecteurs (1), (3) et (5) et respectivement (9), (10) et (11) identiques qui constituent avec leur capteur respectif, les ensembles (D), (E) et (F). Les ensembles (D), (E) et (F) sont isolés des flux thermiques provenant de la partie inférieure par le biais de (14) qui peut être de la mousse silicone qui est espacée de la face inférieure des collecteurs par une couche d'air ou de vide. De cette façon, il est possible de déterminer la part d'énergie provenant de la partie supérieure. En effet, dans ces conditions et selon une autre caractéristique de l'invention, le profil thermique que subira une pièce de masse thermique, d'émissivité, de volume, de surface exposée aux flux thermiques connus et disposée de façon identique aux collecteurs, peut être déterminé grâce aux ensembles (A) et (B) si on considère que la dite pièce capte les flux thermiques supérieurs et inférieurs ou (D) et (E) si on considère que la dite pièce capte les flux thermiques uniquement de la partie supérieure. Il est clair, comme cela a été expliqué précédemment, qu'il suffirait d'isoler thermiquement la face supérieure des collecteurs pour déterminer les flux thermiques issus de la partie inférieure du four.

Ainsi, selon que le circuit imprimé se comporte comme un isolant thermique par rapport aux flux d'énergie de la partie inférieure du four ou non, ainsi que du paramétrage de ce dernier, on peut déterminer de façon certaine les profils thermiques extrêmes dont la carte électronique peut être le siège. En effet le profil thermique le plus chaud atteignable sur la carte est le plus chaud enregistré entre les ensembles (A) et (D) alors que le plus froid atteignable sur la carte est le plus froid enregistré entre les ensembles (C) et (F).

Selon une autre caractéristique de l'invention, il est possible grâce aux profils thermiques subis par les ensembles (A), (B) et (C) ou (D), (E) et (F), de déterminer par calcul le profil thermique dont est le siège une pièce de masse thermique, d'émissivité, de surface et de volume connus selon que l'on la considère isolée thermiquement du flux thermique inférieur du four ou non.

En figure 4, est montré sur un graphique donnant les températures en fonction du temps, un exemple de fenêtre thermique (15) imposée aux fabricants de cartes électroniques ainsi que les profils thermiques extrêmes relevés grâce au dispositif selon la présente invention. Le profil (16) correspond au plus chaud des ensembles (A) et (D) alors que le profil (17) correspond au plus froid des ensembles (C) et (F). (18) est un profil thermique déterminé par calcul pour une émissivité et une masse thermique divisée par la surface exposée aux flux thermiques, intermédiaire présente sur la carte et déterminée selon le calcul inverse à celui présenté précédemment.

La figure 5 représente une coupe (qui ne respecte pas les échelles) d'un four utilisé pour braser ou polymériser une carte électronique (19) sur laquelle des composants (20) de différentes masses thermiques de surface et d'émissivité variables sont montés. La carte est transportée à travers le four sur le convoyeur (21) selon le sens G et est soumise aux flux thermiques des sources (22). Pour mesurer les flux thermiques reçus par les cartes tout au long du four on fait défiler le dispositif selon l'invention (23) dans le four et on relève les profils thermiques subis par les différents ensembles à l'aide d'un enregistreur de température (7) de tout type connu. Comme cela est montré en figure 5, il est également envisageable afin de mesurer l'évolution des températures en cours de production et en temps réel, de fixer le dispositif selon l'invention ainsi que l'enregistreur de température à demeure sur le convoyeur et de transmettre les informations enregistrées sur un poste de contrôle par exemple par le biais d'une liaison sans fil de tout type connue.

Dans ce cas il peut être avantageux d'associer un pyromètre au four, afin de mesurer à chaque passage les valeurs d'émissivité des différents collecteurs et d'en tenir compte pour le calcul des profils énergétiques suivants. Ainsi un encrassement des collecteurs ne faussera pas la mesure. De même, il est possible de positionner un dispositif selon l'invention individuellement pour chacun des produits à traiter de façon à avoir la signature énergétique correspondante à chacun des produits.

Selon une autre caractéristique de l'invention, il est envisageable à partir de la connaissance des pièces constitutives d'un produit et des flux d'énergie infrarouge et convectif, de proposer le paramétrage qui permet de respecter une fenêtre thermique imposée. En effet, pour un générateur de calories donné, on peut déterminer grâce au dispositif de la présente invention, les lois de variation de l'énergie transmise par rayonnement infrarouge et par convection en fonction des températures de consignes, par conséquent, pour une pièce connue et une fenêtre thermique imposée, on peut en déduire les températures de consignes à afficher pour respecter la dite fenêtre thermique. La détermination de la loi de variation pour un four peut se faire en affichant dans les différentes zones du four des températures de consignes uniformément réparties dans la plage de réglage utile et d'en déduire selon le calcul précédemment développé la quantité d'énergie transmise par rayonnement infrarouge et par convection dans chaque zone en fonction de la température de consigne affichée.

Selon une autre caractéristique non revendiquée de l'invention, il est utile de connaître la courbe d'absorption spectroscopique de chacun des collecteurs en fonction de leur température respective de façon à intégrer cette valeur à chaque variation significative de l'émissivité afin de corriger le calcul des énergies radiatives et convectives correspondantes.

Selon une autre caractéristique non revendiquée de l'invention, il devient possible de paramétrer les fours en fonction des caractéristiques physiques du produit à traiter.

La présente invention constitue une avancée significative vers la conception de fours autoparamétrables en fonction des caractéristiques thermiques du produit à traiter. Elle ouvre également la possibilité de correler les défauts avec leur origine thermique et par conséquent d'améliorer la qualité en évitant de générer les conditions thermiques susceptibles de créer les défauts ou imperfections.

**Revendications**

1. Procédé de détermination de l'énergie thermique échangée sous forme convective et infrarouge destiné à déterminer le profil thermique de pièces à traiter dont l'émissivité ($\varepsilon$), la masse thermique (m.c) et la surface (s) exposée aux flux thermiques du générateur de calories sont connues, le dit procédé comportant les étapes suivantes :

- le choix d'un premier ensemble (A) composé d'un collecteur thermique (1) équipé d'un thermocouple. Ledit premier ensemble présentant un rapport masse thermique (m.c) sur la surface exposée (s) connu et choisi de manière à être inférieur à celui des pièces à traiter et une émissivité connue et importante,
- le choix d'un deuxième ensemble (B) composé d'un collecteur thermique (3), orienté et disposé de façon identique au précédent, équipé d'un thermocouple. Ledit deuxième ensemble présentant un rapport masse thermique (m.c) sur la surface exposée (s) connu et choisi de manière à être inférieur à celui des pièces à traiter et une émissivité connue et faible,
- le choix d'un troisième ensemble (C) composé d'un collecteur thermique (5), orienté et disposé de façon identique aux précédents, équipé d'un thermocouple. Ledit troisième ensemble présentant un rapport masse thermique (m.c) sur la surface exposée (s) connu et choisi de manière à être proche de celui des pièces à traiter et une émissivité connue,

la connection desdits trois ensembles à un système enregistreur de température (7) et, à partir des profils de température subis par ces trois ensembles soumis auxdits flux d'énergie, la détermination des trois équations de montée en température des dits ensembles afin de quantifier par calcul et à chaque instant les flux d'énergie transmis par convection et celui transmis par rayonnement par le générateur de calories.

2. Procédé de détermination de l'énergie thermique échangée sous forme convective et infrarouge selon la revendication 1, comportant en outre une étape qui permet, à partir des flux d'énergie convective et infrarouge transmis par le générateur de calories, d'établir le profil thermique que subira une pièce à traiter, la dite pièce étant disposée de façon identique aux collecteurs (A), (B) et (C).

3. Procédé de détermination de l'énergie thermique échangée sous forme convective et infrarouge selon la revendication 1, comportant en outre une étape qui permet, à partir de la connaissance par calcul du flux d'énergie transmis par convection et celui transmis par rayonnement par le générateur de calories, ainsi que la connaissance d'une fenêtre thermique pour ladite pièce à traiter dont on connaît de plus la masse thermique, l'émissivité et la surface exposée aux flux thermiques, disposée avec et de façon identique aux collecteurs, de calculer à partir de l'équation de montée en température de ladite pièce, le profil thermique que la pièce subira.

4. Procédé de détermination de l'énergie thermique échangée sous forme convective et infrarouge, destiné à déterminer le profil thermique de pièces à traiter dont l'émissivité ($\varepsilon$), la masse thermique (m.c) et la surface (s) exposée aux flux thermiques du générateur de calories sont connues, ledit procédé comportant les étapes suivantes :

- le choix d'un premier ensemble (A) composé d'un collecteur thermique équipé d'un 15 thermocouple. Ledit premier ensemble présentant un rapport masse thermique (m.c) sur la surface exposée (s) connu et choisi de manière à être inférieur à celui des pièces à traiter et une émissivité connue et importante,
- le choix d'un deuxième ensemble (B) composé d'un collecteur thermique orienté et disposé de façon identique au précédent, équipé d'un thermocouple. Ledit deuxième ensemble présentant un rapport masse thermique (m.c) sur la surface exposée (s) connu et choisi de manière à être inférieur à celui des pièces à traiter et une émissivité connue et faible,

la connection desdits deux ensembles à un système enregistreur de températures et, à partir des profils de température subis par ces deux ensembles soumis aux dits flux d'énergie et la connaissance du coefficient de transfert thermique (h) du générateur de calories, la détermination des deux équations de montée en température desdits ensembles afin de quantifier par calcul et à chaque instant les flux d'énergie transmis par convection et celui transmis par rayonnement par le générateur de calories.

5. Analyseur thermo-énergétique pour la détermination de l'énergie thermique échangée sous forme convective et infrarouge destiné à déterminer le profil thermique de pièces à traiter dont l'émissivité ($\varepsilon$), la masse thermique (m.c) et la surface exposée (s) aux flux thermiques du générateur de calories sont connues, le dit analyseur comportant les éléments suivants :

- un premier ensemble (A) composé d'un collecteur thermique (1) équipé d'un thermocouple. Ledit premier ensemble présentant un rapport masse thermique (m.c) sur la surface exposée (s) connu et inférieur à celui des pièces à traiter et une émissivité connue et importante,
- un deuxième ensemble (B) composé d'un collecteur thermique (3) orienté et disposé de façon identique au précédent équipé d'un thermocouple. Ledit deuxième ensemble présentant un rapport masse thermique (m. c) sur la surface exposée (s) connu et inférieur à celui des pièces à traiter et une émissivité connue et faible,

- un troisième ensemble (C) composé d'un collecteur thermique (5) orienté et disposé de façon identique aux précédents, équipé d'un thermocouple. Ledit troisième ensemble présentant un rapport masse thermique (m. c) sur la surface exposée (s) connu et proche de celui des pièces à traiter et une émissivité connue, des moyens de fixation des dits trois ensembles (A), (B) et (C) sur une plaque support (12), les dits moyens étant des pièces (8) de très faible section et dont la conductivité thermique est pratiquement nulle, et où chaque collecteur (1) (3) et (5) est respectivement équipé d'un capteur (2) (4) et (6) relié à un enregistreur de température (7) et, des moyens de détermination des trois équations de montée en température des dits ensembles afin de quantifier par calcul et à chaque instant les flux d'énergies transmis par convection et celui transmis par rayonnement par le générateur de calories.

6. Analyseur thermo-énergétique selon la revendication 5, comportant en outre un pyromètre fixe arrangé de façon à permettre de lire à intervalles réguliers les modifications d'émissivité des collecteurs dues à des encrassements et d'en tenir compte dans les calculs des profils énergétiques suivants.

**Patentansprüche**

1. Verfahren zur Bestimmung der durch Konvektion oder Infrarot ausgetauschten thermischen Energie, um das thermische Profil von zu behandelnden Stücken zu bestimmen, von welchen das Strahlungsvermögen ($\varepsilon$), die thermische Masse (m.c) und die den thermischen Flüssen des Wärmeerzeugers ausgesetzte Fläche (s) bekannt sind, mit den folgenden Schritten:

- Auswählen eines ersten Komplexes (A), der aus einem thermischen Kollektor (1) aufgebaut ist, der mit einem Temperaturelement ausgestattet ist, wobei der erste Komplex ein Verhältnis von thermischer Masse (m.c) zur ausgesetzten Fläche (s), das bekannt ist und so gewählt wurde, dass es geringer ist als das der zu behandelnden Stücke, und der ein bekanntes und großes Strahlungsvermögen aufweist,
- Auswählen eines zweiten Komplexes (B), der aus einem thermischen Kollektor (3) aufgebaut ist, der auf identische Weise wie der vorherige ausgerichtet und angeordnet ist und mit einem Temperaturelement ausgestattet ist, wobei der zweite Komplex ein Verhältnis der thermischen Masse (m.c) zur ausgesetzten Fläche (s), das bekannt ist und so gewählt wurde, dass es geringer als das der zu behandelnden Stücke ist, und ein bekanntes und schwaches Strahlungsvermögen aufweist,
- Auswählen eines dritten Komplexes (C), der aus einem thermischen Kollektor (5) aufgebaut ist, der auf identische Weise wie die vorherigen ausgerichtet und angeordnet ist und mit einem Temperaturelement versehen ist, wobei der dritte Komplex ein Verhältnis von thermischer Masse (m.c) zur ausgesetzten Fläche (s), das bekannt ist und so ausgewählt wurde, dass es in der Nähe desjenigen der zu behandelnden Stücke liegt, und ein bekanntes Strahlungsvermögen aufweist, Verbinden der drei Komplexe mit einem Temperaturaufzeichnungssystem (7) und, ausgehend von den Temperaturprofilen, welchen diese drei Komplexe unterliegen, die den Energieflüssen ausgesetzt sind, Bestimmung der drei Gleichungen für den Temperaturanstieg der Komplexe, um durch Berechnung und zu jedem Augenblick die Energieflüsse, die durch Konvektion übertragen werden, und denjenigen, der durch Strahlung von dem Wärmeerzeuger übertragen wird, zu quantifizieren.

2. Verfahren zur Bestimmung der durch Konvektion oder Infrarot ausgetauschten thermischen Energie nach Anspruch 1, das darüber hinaus einen Schritt aufweist, welcher es ermöglicht, ausgehend von dem durch den Wärmeerzeuger erzeugten Energiefluss durch Konvektion und Infrarot, das thermische Profil festzulegen, das ein zu behandelndes Stück haben wird, wobei das Stück auf identische Weise zu den Kollektoren (A), (B) und (C) angeordnet ist.

3. Verfahren zur Bestimmung der durch Konvektion und Infrarot ausgetauschten thermischen Energie nach Anspruch 1, das weiterhin einen Schritt aufweist, welcher durch Berechnung die Kenntnis des Energieflusses ermöglicht, der durch Konvektion übertragen wird, und des Nebenflusses, der durch Strahlung von dem Wäremeerzeuger übertragen wird, sowie die Kenntnis eines thermischen Fensters für das zu behandelnde Stück, von dem man weiterhin die thermische Masse, das Strahlungsvermögen und die den thermischen Flüssen ausgesetzte Fläche kennt, und das in identischer Weise wie die Kollektoren angeordnet ist, um ausgehend von der Gleichung für den Temperaturanstieg des Stückes das thermische Profil zu berechnen, dem das Stück unterliegt.

4. Verfahren zur Bestimmung der durch Konvektion und Infrarot ausgetauschten thermischen Energie, um das thermische Profil von zu behandelnden Stücken zu bestimmen, von welchen das Strahlungsvermögen ($\varepsilon$), die thermische Masse (m.c) und die den thermischen Flüssen des Wärmeerzeugers ausgesetzte Fläche (s) bekannt sind, mit den folgenden Schritten:

- Auswählen eines ersten Komplexes (A), der aus einem thermischen Kollektor aufgebaut ist, der mit einem Temperaturelement ausgestattet ist, wobei der erste Komplex ein Verhältnis von thermischer Masse (m.c) zur ausgesetzten Fläche (s) aufweist, das bekannt ist und so gewählt wurde, dass es kleiner ist als dasjenige der zu behandelnden Stücke, und der ein bekanntes und großes Strahlungsvermögen aufweist,
- Auswählen eines zweiten Komplexes (B), der aus einem thermischen Kollektor aufgebaut ist, der auf identische Weise wie der vorherige ausgerichtet und angeordnet ist und der mit einem Temperaturelement ausgestattet ist, wobei der zweite Komplex ein Verhältnis der thermischen Masse (m.c) zur ausgesetzten Fläche (s) aufweist, das bekannt ist und so gewählt wurde, dass es geringer ist als das der zu behandelnden Stücke, und der ein bekanntes und schwaches Strahlungsvermögen aufweist,

Verbinden der beiden Komplexe mit einem Temperaturaufnahmesystem und,
ausgehend von den Temperaturprofilen, welchen diese zwei Komplexe unterliegen, die den Energieflüssen ausgesetzt sind, und der. Kenntnis des thermischen Übertragungskoeffizienten (h) des Wärmeerzeugers, Bestimmung der zwei Gleichungen für den Temperaturanstieg der Komplexe, um durch Berechnung und zu jedem Zeitpunkt die Energieflüsse, die durch Konvektion übertragen werden, und denjenigen, der durch Strahlung von dem Wärmeerzeuger übertragen wird, zu quantifizieren.

5. Thermoenergieanalysator zur Bestimmung der durch Konvektion oder Infrarot ausgetauschten thermischen Energie, um das thermische Profil von zu behandelnden Stücken zu bestimmen, von welchen das Strahlungsvermögen ($\varepsilon$), die thermische Masse (m.c) und die den thermischen Flüssen des Wärmeerzeugers ausgesetzte Fläche (s) bekannt sind, wobei der Analysator die folgenden Elemente aufweist:

- einen ersten Komplex (A), der aus einem thermischen Kollektor (1) aufgebaut ist, der mit einem Temperaturelement ausgestattet ist, wobei der erste Komplex ein Verhältnis von thermischer Masse (m.c) zur ausgesetzten Fläche (s), das bekannt ist und geringer ist als dasjenige der zu behandelnden Stücke, und ein bekanntes und großes Strahlungsvermögen aufweist,
- einen zweiten Komplex (B), der aus einem thermischen Kollektor (3) aufgebaut ist, der auf identische Weise wie der vorherige ausgerichtet und angeordnet ist, der mit einem Thermoelement ausgestattet ist, wobei der zweite Komplex ein Verhältnis von thermischer Masse (m.c) zur ausgesetzten Fläche (s), das bekannt ist und geringer ist als dasjenige der zu behandelnden Stücke, und ein bekanntes und schwaches Strahlungsvermögen aufweist,
- einen dritten Komplex (C), der aus einem thermischen Kollektor (5) aufgebaut ist, der auf identische Weise wie die vorherigen ausgerichtet und angeordnet ist, der mit einem Temperaturelement ausgestattet ist, wobei der dritte Komplex ein Verhältnis von thermischer Masse (m.c) zur ausgesetzten Fläche (s), das bekannt ist und in der Nähe desjenigen der zu behandelnden Stücke liegt, und ein bekanntes Strahlungsvermögen aufweist,

wobei Befestigungsmittel für die drei Komplexe (A), (B) und (C) auf einer Trägerplatte (12), wobei die Befestigungsmittel Teile mit sehr geringem Querschnitt sind, deren thermische Leitfähigkeit praktisch null ist, und bei welchen jeder Kollektor (1), (3) und (5) jeweils mit einem Sensor (2), (4) und (6) ausgestattet ist, der mit einer Temperaturaufnahmeeinrichtung (7) verbunden ist, und
Mittel zur Bestimmung der drei Gleichungen für den Temperaturanstieg der Komplexe, um durch Berechnung und zu jedem Zeitpunkt die Energieflüsse, die durch Konvektion übertragen werden, und denjenigen, der durch Strahlung von dem Wärmeerzeuger übertragen wird, zu quantifizieren.

6. Thermoenergieanalysator nach Anspruch 5, der weiterhin ein festes Pyrometer aufweist, das dazu ausgestaltet ist, zu ermöglichen, die Änderungen der Abstrahlung der Kollektoren aufgrund von Verschmutzungen auszulesen und diese bei den nachfolgenden Berechnungen der Energieprofile zu berücksichtigen.

**Claims**

1. Process to determine the thermal energy exchanged in convective and infra-red form, intended to determine the thermal profile of articles that are to be treated and whose emissivity ($\varepsilon$), thermal mass (m.c) and surface area (s) exposed to the thermal fluxes from the generator of calories are known, the said process comprising the following stages:

- the choice of a first assembly (A) consisting of a thermal collector (1) equipped with a thermocouple. The said first assembly displays a ratio of thermal mass (m.c) over exposed surface area (s) that is known and is chosen in such a way as to be less than that of the articles to be treated, and a known and large emissivity,
- the choice of a second assembly (B) consisting of a thermal collector (3), aligned and arranged in a manner identical to the foregoing one, equipped with a thermocouple. The said second assembly displays a ratio of thermal mass (m.c) over exposed surface area (s) that is known and is chosen in such a way as to be less than that of the articles to be treated, and a known and small emissivity,
- the choice of a third assembly (C) consisting of a thermal collector (5), aligned and arranged in a manner identical to the foregoing ones, equipped with a thermocouple. The said third assembly displays a ratio of thermal mass (m.c) over exposed surface area (s) that is known and is chosen in such a way as to be close to that of the articles to be treated, and a known emissivity,
- the connection of the said three assemblies to a temperature recording system (7) and, based on the temperature profiles experienced by these three assemblies subjected to the said fluxes of energy, the determination of the three temperature increase equations of the said assemblies in order to quantify, by calculation and at each moment, the energy fluxes transmitted by convection and that transmitted by radiation by the generator of calories.

2. Process to determine the thermal energy exchanged in convective and infra-red form, according to Claim 1, comprising in addition a stage that enables, based on the convective and infra-red energy fluxes transmitted by the generator of calories, the establishment of the thermal profile to which an article to be treated will be subjected, the said article being arranged in a manner identical to the collectors (A), (B) and (C).

3. Process to determine the thermal energy exchanged in convective and infra-red form, according to Claim 1, comprising in addition a stage that enables, based on the knowledge by calculation of the energy flux transmitted by convection and that transmitted by radiation by the generator of calories, together with the knowledge of a thermal window for the said article to be treated, whose thermal mass, emissivity and surface area exposed to the thermal fluxes are also known, arranged with and in a manner identical to that of the collectors, the calculation, based on the temperature increase equation of the said article, of the thermal profile that the article will undergo.

4. Process to determine the thermal energy exchanged in convective and infra-red form, intended to determine the thermal profile of articles that are to be treated and whose emissivity ($\varepsilon$), thermal mass (m.c) and surface area (s) exposed to the thermal fluxes from the generator of calories are known, the said process comprising the following stages:

- the choice of a first assembly (A) consisting of a thermal collector equipped with a thermocouple. The said first assembly displays a ratio of thermal mass (m.c) over exposed surface area (s) that is known and is chosen in such a way as to be less than that of the articles to be treated, and a known and large emissivity,
- the choice of a second assembly (B) consisting of a thermal collector, aligned and arranged in a manner identical to the foregoing one, equipped with a thermocouple. The said second assembly displays a ratio of thermal mass (m.c) over exposed surface area (s) that is known and is chosen in such a way as to be less than that of the articles to be treated, and a known and small emissivity,
- the connection of the said two assemblies to a temperature recording system and, based on the temperature profiles experienced by these two assemblies subjected to the said fluxes of energy, and the knowledge of the heat transfer coefficient (h) of the generator of calories, the determination of the two temperature increase equations of the said assemblies in order to quantify, by calculation and at each moment, the energy fluxes transmitted by convection and that transmitted by radiation by the generator of calories.

5. Thermo-energetic analyser to determine the thermal energy exchanged in convective and infra-red form, intended to determine the thermal profile of articles that are to be treated and whose emissivity ($\varepsilon$), thermal mass (m.c) and surface area (s) exposed to the thermal fluxes from the generator of calories are known, the said analyser comprising the following elements:

- a first assembly (A) consisting of a thermal collector (1) equipped with a thermocouple. The said first assembly displays a ratio of thermal mass (m.c) over exposed surface area (s) that is known and is less than that of the articles to be treated, and a known and large emissivity,

- a second assembly (B) consisting of a thermal collector (3), aligned and arranged in a manner identical to the foregoing one, equipped with a thermocouple. The said second assembly displays a ratio of thermal mass (m. c) over exposed surface area (s) that is known and is less than that of the articles to be treated, and a known and small emissivity,

- a third assembly (C) consisting of a thermal collector (5), aligned and arranged in a manner identical to the foregoing ones, equipped with a thermocouple. The said third assembly displays a ratio of thermal mass (m. c) over exposed surface area (s) that is known and is close to that of the articles to be treated, and a known emissivity,

- means for fastening the said three assemblies (A), (B) and (C) onto a support plate (12), the said means being pieces (8) whose cross-section is very small and whose thermal conductivity is practically zero, and where each collector (1), (3) and (5) is equipped with a collector (2), (4) and (6) respectively, connected to a temperature recorder (7),

- means to determine the three temperature increase equations of the said assemblies in order to quantify, by calculation and at each moment, the energy fluxes transmitted by convection and that transmitted by radiation by the generator of calories.

6. Thermo-energetic analyser according to Claim 5, comprising in addition a fixed pyrometer arranged in such a way as to allow the reading, at regular intervals, of the changes in emissivity of the collectors due to dirt accumulations, and to allow them to be taken into account in the subsequent calculations of the energetic profiles.

**Fig 1**

EP 1 218 708 B1

**Fig 2**

Fig 3

**Fig 4**

**Fig 5**